# EUROPÄISCHE PATENTSCHRIFT

(11) **EP 0 538 948 B1**
(45) Veröffentlichungstag und Bekanntmachung des Hinweises auf die Patenterteilung: **21.05.1997**
(21) Anmeldenummer: 92203211.5
(22) Anmeldetag: 20.10.1992
(51) Int. Cl.: H04N 9/73, H04N 9/09

(54) **Verfahren und Schaltung zur Korrektur von Abschattungen**
Method and circuit for shadow correction
Méthode et circuit pour la correction des ombres

(30) Priorität: 25.10.1991 DE 4135210
(43) Veröffentlichungstag der Anmeldung: 28.04.1993
(73) Patentinhaber: Philips Broadcast Television Systems GmbH, 64347 Griesheim (DE); Philips Electronics N.V., 5621 BA Eindhoven (NL)
(72) Erfinder: de Groot, Gert Jan, CH-6314 Unterägeri (CH); Hamering, Hans, NL-4824 GL Breda (NL)
(74) Vertreter: den Braber, Gerard Paul

(56) Entgegenhaltungen:
- EP-A- 0 324 925
- US-A- 4 733 296
- PATENT ABSTRACTS OF JAPAN vol. 13, no. 106 (E-726)14. M rz 1989 & JP-A-63 276 992
- PATENT ABSTRACTS OF JAPAN vol. 14, no. 320 (E-950)10. Juli 1990 & JP-A-21 05 682

## Beschreibung

Die Erfindung geht aus von einem Verfahren zur Korrektur von Abschattungen im oberen oder unteren Bereich der Aufnahmefläche von opto-elektrischen Wandlern einer Farbfernsehkamera gemäß dem Oberbegriff des Patentanspruchs 1.

Es ist bekannt, daß der optische Eingang einer Farbfernsehkamera, also sowohl das Aufnahme-Objektiv, insbesondere Zoom-Objektiv bei verschiedenen Blendenöffnungen als auch der Strahlenteiler, unterschiedliche Abschattungen auf der lichtempfindlichen Fläche eines jeden opto-elektrischen Wandlers einer Mehrkanal-Farbfernsehkamera bewirken, wodurch das auf dem Bildschirm wiedergegebene Bild unterschiedliche Helligkeit aufweist, beispielsweise in der Mitte heller ist als an den Rändern. Diese auf jeder der Aufnahmeflächen etwa gleich wirkenden Abschattungen können im allgemeinen elektronisch durch Steuerung der Videosignale mit H- und V-frequenten Sägezahn- und Parabelspannungen kompensiert werden.

Bei der Verwendung eines Zoom-Objektives ist nun bei zunehmender Öffnung der Blende über einen bestimmten Wert, beispielsweise etwa ab Blende 2,8 bis 1,4, in Abhängigkeit der Zoom-Einstellung eine weitere Abschattung festzustellen, und zwar werden die opto-elektrischen Wandler in den verschiedenen Farbkanälen sowohl bei Weitwinkel- als auch bei Tele-Einstellung unterschiedlich beleuchtet. Bei Weitwinkel-Einstellung werden die opto-elektrischen Wandler infolge der optischen Begrenzung der Austrittspupille des Objektivs und der Wirkung der dichroitischen Schichten des Strahlenteilers bei verschiedenen Auftreffwinkeln des Lichtstrahles im blauen und roten Farbkanal im oberen Bereich weniger beleuchtet als im unteren Bereich, während der opto-elektrische Wandler im grünen Farbkanal entsprechend umgekehrt im oberen Bereich mehr als im unteren beleuchtet wird. Im Gegensatz dazu werden die opto-elektrischen Wandler ab einer bestimmten Tele-Einstellung infolge der optischen Begrenzung der Eintrittspupille des Objektivs ebenfalls in Verbindung mit der Wirkung des Strahlenteilers im blauen und roten Farbkanal im oberen Bereich mehr beleuchtet als im unteren Bereich, während der opto-elektrische Wandler im Grünkanal umgekehrt beleuchtet wird. Infolgedessen wird bei Aufnahme einer weißen Vorlage ab einer objektiv-spezifischen Blendenöffnung und Weitwinkel-Einstellung auf dem Bildschirm eines Farbfernsehmonitors der obere Bereich grünlich und der untere Bereich im gewissen Grade magenta wiedergegeben. Bei der Tele-Einstellung kehren sich diese Verfärbungen des unteren und oberen Bereichs des Bildschirms um, so daß der obere Bereich magenta und der untere Bereich grünlich erscheinen. Die Verfärbungen werden dabei umso stärker je größer die Blendenöffnung und je extremer die Zoom-Einstellung ist.

JP-A-63 276 992 offenbart die Korrektur von Farbschaffierungen in einer Farbkamera, in dem die Horizontalablenkung durch Regelsignale Korrigiert wird.

Der vorliegenden Erfindung liegt daher die Aufgabe zugrunde, ein Verfahren der eingangs genannten Art anzugeben, mit dem diese Verfärbungen sicher beseitigt werden können.
Diese Aufgabe wird durch die im Kennzeichen des Patentanspruchs 1 angegebenen Merkmale gelöst.

Das erfindungsgemäße Verfahren mit den kennzeichnenden Merkmalen des Patentanspruchs 1 hat den Vorteil, daß für jedes für eine Farbfernsehkamera vorgesehene Zoom-Objektiv eine geeignete, die Verfärbungen beseitigende Kompensation automatisch erfolgt.

Durch die in den Unteransprüchen aufgeführten Maßnahmen sind vorteilhafte Weiterbildungen und Verbesserungen des im Patentanspruch 1 angegebenen Verfahrens möglich. In weiteren Unteransprüchen ist eine vorteilhafte Schaltung zur Durchführung des Verfahrens angegeben.

Ein Ausführungsbeispiel der Erfindung ist in der Zeichnung dargestellt und in der nachfolgenden Beschreibung näher erläutert. Es zeigen:
- Fig. 1: ein Blockschaltbild einer Farbfernsehkamera mit deren wesentlichen Teilen bezüglich der Erfindung,
- Fig. 2: ein Blockschaltbild der erfindungsgemäßen Schaltung zur Abschattungskorrektur.

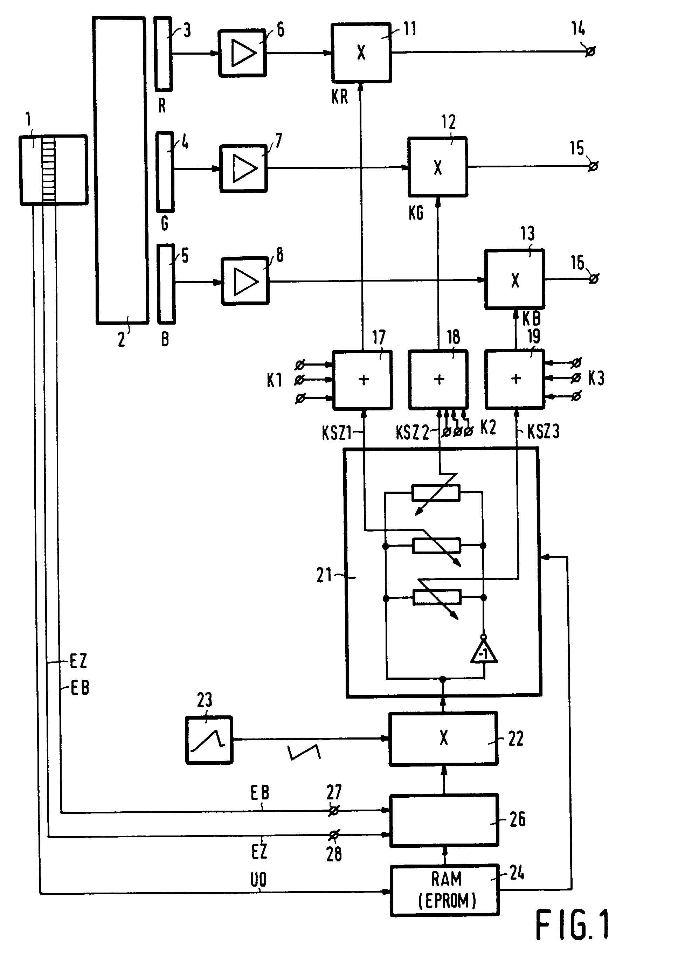

In Figur 1 sind nur die Teile einer Farbfernsehkamera dargestellt, welche zur Erläuterung der Erfindung notwendig sind. Über ein auswechselbares Zoom-Objektiv 1 und einen Strahlenteiler 2 mit dichriotischen Schichten zur Farbteilung wird ein Bild der aufzunehmenden Szene auf die opto-elektrischen Wandler 3, 4, 5, beispielsweise Halbleitersensoren (CCD) für die Farbkanäle Rot (R), Grün (G), Blau (B) abgebildet. Die Videosignalausgänge der opto-elektrischen Wandler 3, 4, 5 sind mit entsprechenden Eingängen von Vorverstärkern 6, 7, 8 verbunden, in denen die Videosignale verstärkt werden. Im Videosignalweg nach den Vorverstärkern 6, 7, 8 sind dann Videosignal-Verarbeitungsschaltungen 11, 12, 13 angeordnet, in denen die Videosignale in an sich bekannter Weise korrigiert und weiter verstärkt werden, ehe sie zur Weiterleitung bzw. weiteren Verarbeitung an den Ausgangsklemmen 14, 15, 16 abnehmbar sind.

Die Videosignal-Verarbeitungsschaltungen 11, 12, 13 enthalten je einen steuerbaren Verstärker, welche durch an den Steuereingängen anliegenden Steuersignale KR, KG, KB im Verstärkungsgrad verändert werden können. Diese Steuersignale werden in je einer Addierstufe 17, 18, 19 erzeugt, in welchen verschiedene, zum Beispiel von unterschiedlichen Abschattungen verursachte Korrektursignale K1, K2, K3 zusammengefaßt werden. Außerdem werden den Addierstufen 17, 18, 19 weitere, mittels des erfindungsgemäßen Verfahrens erzeugte sägezahnförmige Steuersignale KSZ 1, KSZ 2 und KSZ 3 von einer als elektronisch regelbarer Spannungsteiler wirkenden Schaltung 21, beispielsweise einem multiplizierenden D/A-Wandler, zugeführt. Die sägezahnförmigen Steuersignale KSZ werden mit Hilfe eines Multiplizierers 22 erzeugt, welchem einerseits ein V-frequentes Sägezahnsignal von einem Sägezahngenerator 23 und andererseits eine von den aktuellen und gespeicherten Objektivdaten abhängige Regelspannung zur Regelung des V-frequenten Sägezahnsignals zugeführt werden.

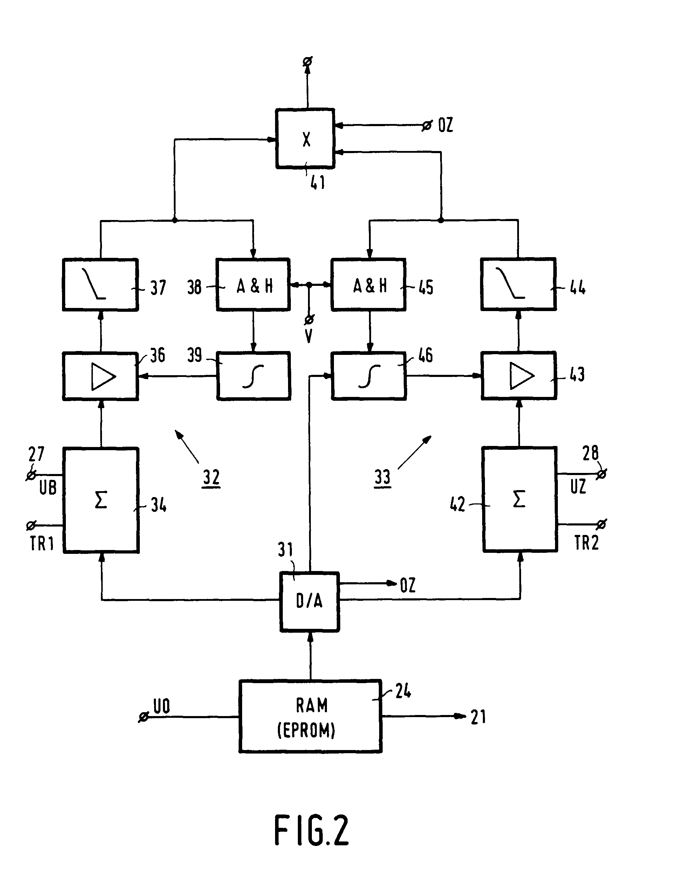

Diese Regelspannung wird in Abhängigkeit der aktuellen Positionswerte von Zoomeinstellung und Blendenöffnung des Zoom-Objektivs 1 und der in einem Speicher 24 (RAM bzw. EPROM) gespeicherten objektiv-spezifischen Werte von Mindest-Blendenöffnung und Mindest-Zoom-Einstellung über eine Regelschaltung 26 erzeugt. Einzelheiten und Wirkungsweise der Regelschaltung 26 sollen in Zusammenhang mit der Beschreibung von Figur 2 näher erläutert werden.

In Abhängigkeit der jeweils aktuellen Einstellung der Blendenöffnung sowie der Zoom-Stellung werden der Regelschaltung 26 Einstellsignale EB bzw. EZ zugeführt. Weiterhin wird von dem Zoom-Objektiv 1 ein Kennsignal UO für den Speicher 24 abgeleitet, um die entsprechenden objektiv-spezifischen Daten auslesen zu können. Vom Speicher 24 wird außerdem ein Steuersignal (Takt- und Datensignal) für die Schaltung 21 abgegeben.

In Figur 2 ist das Blockschaltbild der Regelschaltung 26 in Verbindung mit dem Speicher 24 von Figur 1 dargestellt. Wie bereits ausgeführt, sind aus dem Speicher 24 in Abhängigkeit des Objektiv-Kennsignals UO die objektiv-spezifischen Daten für Mindest-Blendenöffnung sowie Mindest-Zoom-Einstellung für "Weitwinkel" und "Tele" auslesbar. Diese Datensignale werden über einen D/A-Wandler 31 einerseits als Analogspannung der Mindest-Blendenöffnung dem Blendenregelzweig 32 und andererseits als Analogspannung der Mindest-Zoomeinstellung für "Weitwinkel" und "Tele" dem Zoom-Regelzweig 33 zugeführt.

Der erste Ausgang des D/A-Wandlers 31 ist dabei mit einem Eingang einer Summierschaltung 34 verbunden, an deren weiteren Eingängen (über Klemme 27) das jeweils aktuelle Blendensignal EB und ein Referenz-Taktsignal TR 1 anliegen. Dieses Referenz-Taktsignal TR 1 ist ein V-frequentes Impulssignal mit einer Impulsbreite von Zeilendauer. Am Ausgang der Summierschaltung 34 ist dann oberhalb der Mindest-Blendenöffnung ein entsprechend der aktuellen Blendeneinstellung erzeugtes Gleichspannungssignal mit V-frequenten Impulsen abnehmbar. Dieses Signal wird einer Verstärkungsregelschaltung, bestehend aus einem regelbaren Verstärker 36, einem Begrenzer 37, einer im Rückkopplungszweig liegenden, mit dem V-frequenten Impulssignal gesteuerten Abtast- und Halte-Schaltung 38 und einer Integratorschaltung 39, zugeführt. Der regelbare Verstärker 36 wird durch die Rückkopplungs-Steuerspannung so eingestellt, daß ein bestimmter Spannungswert - beispielsweise 1,5 Volt - nicht überschritten wird, um den nachfolgenden Multiplizierer 41 vor Übersteuerung zu schützen, an dessen ersten Eingang das Ausgangssignal des Blendenregelzweiges 32 angelegt wird.

In dem Zoom-Regelzweig 33 ist eine weitere Summierschaltung 42 vorgesehen, deren erster Eingang mit dem zweiten Ausgang des D/A-Wandlers 31 verbunden ist, an deren zweiten Eingang über Klemme 28 das jeweils aktuelle Zoom-Signal EZ und an deren dritten Eingang ein Referenz-Taktsignal TR 2 anliegen. Das Referenz-Taktsignal TR 2 ist ebenfalls ein V-frequentes Impulssignal mit einer Impulsbreite von Zeilendauer. Am Ausgang der Summierschaltung 42 ist dann oberhalb einer bestimmten Mindest-Weitwinkel-Einstellung bzw. Mindest-Tele-Einstellung ein entsprechend der aktuellen Zoom-Einstellung erzeugtes Gleichspannungssignal mit V-frequenten Impulsen abnehmbar. Dieses Signal wird einer Verstärkungsregelschaltung, bestehend aus einem regelbaren Verstärker 43, einem Begrenzer 44, einer im Rückkopplungszweig liegenden, mit dem V-frequenten Impulssignal gesteuerten Abtast- und Halte-Schaltung 45 und einer Integratorschaltung 46, zugeführt. Auch bei dieser Verstärkungsregelschaltung wird der regelbare Verstärker 43 so eingestellt, daß ein bestimmter Spannungswert nicht überschritten wird. Der Ausgang der Verstärkungsregelschaltung ist mit dem zweiten Eingang des Multiplizierers 41 verbunden. Einem dritten, invertierenden Eingang des Multiplizierers 41 wird vom dritten Ausgang des D/A-Wandlers 31 ein Zoom-Offset-Signal OZ zur Symmetrie-Einstellung der Regelspannung zugeführt. Am Ausgang des Multiplizierers 41 ist danach die Regelspannung zur Steuerung des V-Sägezahnsignals im Multiplizierer 22 (Fig. 1) abnehmbar.

Zwischen einer bestimmten Mindest-Blendenöffnung - z. B. ab Blende 2,8 - und der vollen Blendenöffnung wird also bei Weitwinkel-Einstellung dem ersten Eingang des Multiplizierers 41 eine der Blendenöffnung entsprechend ansteigende Gleichspannung zugeführt, während dem zweiten Eingang zunächst eine unterhalb der Zoom-Offset-Spannung liegende und damit als Regelspannung nicht wirksame Gleichspannung vom Begrenzer 44 zugeführt wird. Erst ab einer bestimmten Tele-Einstellung des Zoom-Objektivs wird die am Begrenzer 44 abnehmbare Gleichspannung die Zoom-Offset-Spannung übersteigen und damit eine Phasenänderung des Sägezahnsignals bewirken. Mit diesem gesteuerten V-Sägezahnsignal sind über die Schaltung 21 sowie die Addierstufen 17, 18, 19 die Videosignal-Verarbeitungsschaltungen 11, 12, 13 so regelbar, daß an den Ausgängen 14, 15, 16 je ein Videosignal R,G,B ohne Abschattung auch bei äußerster Blendenöffnung und extremer Zoom-Einstellung sowohl für die Weitwinkel- als auch für die Tele-Einstellung abnehmbar ist.

## Patentansprüche

1. Verfahren zur Korrektur von Abschattungen im oberen oder unteren Bereich der Aufnahmefläche von opto-elektrischen Wandlern einer Mehrkanal-Farbfernsehkamera mit Zoom-Objektiv, welche bei Überschreiten einer objektiv-spezifischen Mindest-Blendenöffnung und in Abhängigkeit der Zoom-Einstellung entstehen, wobei je ein repräsentatives Signal sowohl von der Einstellung der Blendenöffnung als auch von der Zoom-Einstellung abgeleitet wird, dadurch gekennzeichnet, daß von diesen repräsentativen Signalen jeweils in Abhängigkeit von entsprechenden Signalen der Mindest-Blendenöffnung einerseits und der Mindestwerte von Weitwinkel- und Tele-Einstellung des Zoom-Bereiches andererseits je eine Regelspannung erzeugt wird, daß mit diesen Regelspannungen der Pegel eines V-frequenten Sägezahnsignals gesteuert wird und daß mit diesem sägezahnförmigen Steuersignal das jeweilige Videosignal eines Farbkanals im Sinne einer Kompensation der Schattierungen beeinflußt wird.

2. Verfahren nach Anspruch 1, dadurch gekennzeichnet, daß zur Amplitudenstabilisierung der Regelspannungen je ein V-frequenter Referenz-Taktimpuls von Zeilenbreite hinzugefügt wird, mit dessen Hilfe die Regelspannungs-Amplituden automatisch eingestellt werden.

3. Verfahren nach Anspruch 1,dadurch gekennzeichnet, daß die von der Zoom-Einstellung abhängige Regelspannung symmetrisch einstellbar ist.

4. Verfahren nach Anspruch 1,dadurch gekennzeichnet, daß die Regelspannungen weiterhin in Abhängigkeit entsprechend gespeicherter Blenden- und Zoomwert-Daten verschiedener Objektive erzeugt werden.

5. Verfahren nach Anspruch 1, dadurch gekennzeichnet, daß die beiden von Mindest-Blendenöffnung und Zoom-Einstellung abhängigen Regelspannungen jeweils miteinander multipliziert werden.

6. Verfahren nach Anspruch 5, dadurch gekennzeichnet, daß zur Erzeugung des sägezahnförmigen Steuersignals das Produktsignal der beiden Regelspannungen mit dem V-frequenten Sägezahnsignal multipliziert wird.

7. Verfahren nach Anspruch 1, dadurch gekennzeichnet, daß bei Änderung der Zoom-Einstellung von einer Weitwinkel-Position in eine Tele-Position bzw. umgekehrt das V-frequente Sägezahnsignal in seiner Phase um 180° verschoben wird.

8. Schaltung zur Durchführung des Verfahrens nach Anspruch 1, 2 5 und 6, gekennzeichnet durch
- einen ersten Regelzweig (32) mit einer ersten Summierstufe (34), an deren ersten Eingang (27) das von der Blendenöffnungs-Einstellung abgeleitete Signal (UB), an deren zweiten Eingang der V-frequente Referenz-Taktimpuls (TR 1), an deren dritten Eingang das Signal für die objektiv-spezifische Mindest-Blendenöffnung anliegen und deren Ausgang über eine automatische Verstärkungsregelschaltung mit dem ersten Eingang eines ersten Multiplizierers (41) verbunden ist,
- einen zweiten Regelzweig (33) mit einer zweiten Summierstufe (42), an deren ersten Eingang (28) das von der Zoom-Einstellung abgeleitete Signal (EZ), an deren zweiten Eingang das Signal für die Mindestwerte von Weitwinkel- und Tele-Einstellung des Zoom-Bereichs, an deren dritten Eingang der V-frequente Referenz-Taktimpuls (TR2) anliegen und deren Ausgang über eine automatische Verstärkungs-Regelschaltung mit dem zweiten Eingang des ersten Multiplizierers (41) verbunden ist,
- einen zweiten Multiplizierer (22), dessen erster Eingang mit dem Ausgang des ersten Multiplizierers (41) verbunden ist, an dessen zweiten Eingang das V-frequente Sägezahnsignal anliegt und an dessen Ausgang das sägezahnförmige Steuersignal (KSZ) abnehmbar ist, welches dem Steuersignaleingang der jeweiligen Videosignal-Verarbeitungsschaltung (11, 12, 13) in den Farbkanälen (R,G,B) der Farbfernsehkamera zugeführt wird.

9. Schaltung nach Anspruch 8, dadurch gekennzeichnet, daß eine Objektiv-Speicheranordnung (24) vorgesehen ist, in welcher die objektiv-spezifischen Daten, insbesondere Mindest-Blendenöffnung und Mindest-Einstellung von "Weitwinkel" und "Tele" des Zoom-Bereichs von Fernsehkamera-Zoom-Objektiven gespeichert sind, und daß der Ausgang des Speichers (24) über einen D/A-Wandler (31) an den jeweils dritten Eingang der beiden Summierstufen (34, 42) angeschlossen ist.

10. Schaltung nach Anspruch 9, dadurch gekennzeichnet, daß der Speicher (24) für die Objektivdaten ein Schreib-Lese-Speicher (RAM) ist.

11. Schaltung nach Anspruch 9, dadurch gekennzeichnet, daß für jedes Zoom-Objektiv eine eigene Objektiv-Speicheranordnung (24) vorgesehen ist, welche bei Wechseln des Zoom-Objektivs (1) ebenfalls auswechselbar ist.

## Claims

1. A method of correcting vignetting in the upper or lower range of the pickup area of optoelectric transducers of a multichannel colour television camera comprising a zoom lens, which vignetting is produced in dependence upon the zoom setting and when an objective-specific minimum diaphragm aperture value is exceeded, in which method a representative signal is derived from the diaphragm aperture setting and from the zoom setting, characterized in that, dependent on corresponding signals for the minimum diaphragm aperture and the minimum values for wide-angle setting and telesetting of the zoom range, said representative signals generate control voltages, in that said control voltages control the level of a field frequency sawtooth signal and in that said sawtooth-shaped control signal influences the video signal of each chrominance channel in the sense of a vignetting compensation.

2. A method as claimed in Claim 1, characterized in that for amplitude stabilization of the control voltages a field frequency reference clock pulse having a width of one line period is added, by means of which the control voltage amplitudes are automatically adjusted.

3. A method as claimed in Claim 1, characterized in that the control voltage dependent on the zoom setting values is symmetrically adjustable.

4. A method as claimed in Claim 1, characterized in that the control voltages are generated in dependence upon correspondingly stored diaphragm and zoom value data of different objectives.

5. A method as claimed in Claim 1, characterized in that the two control voltages dependent on the minimum diaphragm aperture and zoom setting values are multiplied by each other.

6. A method as claimed in Claim 5, characterized in that the product signal of the two control voltages is multiplied by the field frequency sawtooth signal for generating the sawtooth-shaped control signal.

7. A method as claimed in Claim 1, characterized in that in the case of changing the zoom setting from a wide-angle position to a teleposition, or conversely, the field frequency sawtooth signal is shifted 180° in phase.

8. A circuit for performing the method as claimed in Claims 1, 2, 5 and 6, characterized by
- a first control branch (32) comprising a first summing stage (34) whose first input (27) conveys the signal (UB) derived from the diaphragm aperture setting, whose second input conveys the field frequency reference clock pulse (TR1), whose third input conveys the signal for the objective-specific minimum diaphragm aperture and whose output is connected *via* an automatic gain control circuit to the first input of a first multiplier (41),
- a second control branch (33) comprising a second summing stage (42), whose first input (28) conveys the signal (EZ) derived from the zoom setting, whose second input conveys the signal for the minimum wide-angle setting and telesetting values of the zoom range, whose third input conveys the field frequency reference clock pulse (TR2) and whose output is connected *via* an automatic gain control circuit to the second input of the first multiplier (41),
- a second multiplier (22) whose first input is connected to the output of the first multiplier (41), whose second input conveys the field frequency sawtooth signal and from whose output the sawtooth-shaped control signal (KSZ) can be derived, which control signal is applied to the control signal input of the respective video signal processing circuit (11, 12, 13) in the chrominance channels (R, G, B) of the colour television camera.

9. A circuit as claimed in Claim 8, characterized in that an objective memory arrangement (24) is provided in which the objective-specific data, particularly minimum diaphragm aperture and minimum setting of "wide-angle" and "tele" of the zoom range of television camera zoom lenses are stored, and in that the output of the memory (24) is connected via a D/A converter (31) to the third input of the two summing stages (34, 42).

10. A circuit as claimed in Claim 9, characterized in that the memory (24) for the objective data is a random-access memory (RAM).

11. A circuit as claimed in Claim 9, characterized in that an objective memory arrangement (24) is provided for each zoom lens, which arrangement is also exchangeable when the zoom lens (1) is changed.

## Revendications

1. Procédé de correction d'ombres dans la zone supérieure ou inférieure de . la surface réceptrice de convertisseurs optoélectriques d'une caméra de télévision en couleurs à plusieurs canaux avec un objectif zoom, lesdites ombres se formant lors du dépassement d'une ouverture minimum du diaphragme spécifique à l'objectif et en fonction du réglage de zoom, procédé dans lequel des signaux représentatifs sont tirés autant du réglage de l'ouverture du diaphragme que du réglage de zoom, caractérisé en ce que ces signaux représentatifs produisent des tensions de réglage en fonction de signaux correspondants de l'ouverture minimum du diaphragme, d'une part, et des valeurs minimales de réglage grand angle et de réglage téléobjectif du domaine de zoom, d'autre part, en ce que le seuil d'un signal en dents de scie à fréquence V est commandé par ces tensions de réglage et en ce que le signal vidéo respectif d'un canal de couleur est influencé par ce signal de commande en dents de scie dans le sens d'une compensation des ombres.

2. Procédé selon la revendication 1, caractérisé en ce qu'on ajoute, pour stabiliser l'amplitude des tensions de réglage, chaque fois une impulsion de cadence de référence à fréquence V de la largeur d'une ligne, à l'aide de laquelle les amplitudes des tensions de réglage sont automatiquement réglées.

3. Procédé selon la revendication 1, caractérisé en ce que la tension de réglage en fonction du réglage de zoom peut être réglée symétriquement.

4. Procédé selon la revendication 1, caractérisé en ce que les tensions de réglage sont produites par ailleurs en fonction de données des valeurs de diaphragme et de zoom stockées de divers objectifs.

5. Procédé selon la revendication 1, caractérisé en ce que les deux tensions de réglage en fonction de l'ouverture minimum du diaphragme et du réglage de zoom sont multipliées respectivement l'une par l'autre.

6. Procédé selon la revendication 5, caractérisé en ce que le signal de produit des deux tensions de réglage est multiplié par le signal en dents de scie à fréquence V pour produire le signal de commande en dents de scie.

7. Procédé selon la revendication 1, caractérisé en ce que, lorsque l'on modifie le réglage de zoom d'une position grand angle à une position téléobjectif ou inversement, la phase du signal en dents de scie à fréquence V est décalée de 180°.

8. Circuit permettant d'exécuter le procédé selon les revendications 1, 2, 5 et 6, caractérisé par :
- une première branche de réglage (32) avec un premier étage de sommation (34) à la première entrée (27) duquel est appliqué le signal (UB) tiré du réglage de l'ouverture du diaphragme, à la deuxième entrée duquel est appliquée l'impulsion de cadence de référence à fréquence V (TR 1), à la troisième entrée duquel est appliqué le signal pour l'ouverture minimum du diaphragme spécifique à l'objectif et dont la sortie est connectée, via un circuit de réglage d'amplification automatique, à la première entrée d'un premier multiplicateur (41),
- une deuxième branche de réglage (33) avec un deuxième étage de sommation (42) à la première entrée (28) duquel est appliqué le signal (EZ) tiré du réglage de zoom, à la deuxième entrée duquel est appliqué le signal pour les valeurs minimales de réglage grand angle et téléobjectif du domaine de zoom, à la troisième entrée duquel est appliquée l'impulsion de cadence de référence à fréquence V (TR 2) et dont la sortie est connectée, via un circuit de réglage d'amplification automatique, à la deuxième entrée du premier multiplicateur (41),
- un deuxième multiplicateur (22), dont la première entrée est connectée à la sortie du premier multiplicateur (41), à la deuxième entrée duquel est appliqué le signal en dents de scie à fréquence V et à la sortie duquel peut être prélevé le signal de commande en dents de scie (KSZ), qui est acheminé à l'entrée de signaux de commande du circuit de traitement de signaux vidéo respectifs (11, 12, 13) dans les canaux de couleurs (R, V, B) de la caméra de télévision en couleurs.

9. Circuit selon la revendication 8, caractérisé en ce qu'il est prévu un agencement de mémorisation d'objectif (24), dans lequel les données spécifiques à l'objectif, en particulier l'ouverture minimum du diaphragme et le réglage minimum "grand angle" et "téléobjectif" du domaine de zoom de la caméra de télévision sont mémorisées, et en ce que la sortie de la mémoire (24) est raccordée, via un convertisseur D/A (31), à la troisième entrée respective des deux étages de sommation (34, 42).

10. Circuit selon la revendication 9, caractérisé en ce que la mémoire (24) pour les données d'objectif est une mémoire à accès sélectif (RAM).

11. Circuit selon la revendication 9, caractérisé en ce que, pour chaque objectif zoom, il est prévu un agencement de mémorisation d'objectif propre (24), qui est également échangeable lors du changement de l'objectif zoom (1).
